# EUROPÄISCHE PATENTANMELDUNG

(11) **EP 4 461 691 A1**
(43) Veröffentlichungstag der Anmeldung: **13.11.2024**
(21) Anmeldenummer: 24174117.2
(22) Anmeldetag: 03.05.2024
(51) Int. Cl.: B66C 1/66, F16B 45/00, E04B 1/41, B66B 11/00

(54) **LASTAUFNAHMEVORRICHTUNG, INSBESONDERE FÜR DEN AUFZUGSBAU**

(30) Priorität: 04.05.2023 DE 102023001801; 04.05.2023 DE 202023000980 U
(71) Anmelder: PohlCon GmbH, 12057 Berlin (DE)
(72) Erfinder: Ayoubi, Mazen, 61352 Bad Homburg (DE); Portmann, Stefan, 8332 Russikon (CH)
(74) Vertreter: Gulde & Partner

(57) **Zusammenfassung**

Die Erfindung betrifft eine Lastaufnahmevorrichtung (1), mit einer Aufnahmemulde (2) zur Aufnahme eines Lastaufnahmeelementes (3), und mit einem in der Aufnahmemulde (2) befestigten ferromagnetischen Lastaufnahmeelement (3), wobei das Lastaufnahmeelement (3) in der Aufnahmemulde (2) um eine Schwenkachse (4) zwischen einer Ausschwenkstellung und einer Einschwenkstellung verschwenkbar ist, wobei das Lastaufnahmeelement (3) in der Einschwenkstellung in die Aufnahmemulde (2) eingeschwenkt ist, und wobei das Lastaufnahmeelement (3) in der Ausschwenkstellung aus der Aufnahmemulde (2) ausgeschwenkt und für das Anhängen einer Last positioniert ist. Sie ist dadurch gekennzeichnet, dass ein Federelement (5) eingerichtet ist, welches das Lastaufnahmeelement (3) in Richtung der Ausschwenkstellung federbelastet, und dass in der Aufnahmemulde (2) ein Magnetelement (6) befestigt ist, welcher das Lastaufnahmeelement (3) in der Einschwenkstellung gegen die Federkraft des Federelements (5) fest hält.

## Beschreibung

### Gebiet der Erfindung

Die Erfindung betrifft eine Lastaufnahmevorrichtung, mit einer Aufnahmemulde zur Aufnahme eines Lastaufnahmeelementes, und mit einem in der Aufnahmemulde befestigten ferromagnetischen Lastaufnahmeelement, wobei das Lastaufnahmeelement in der Aufnahmemulde um eine Schwenkachse zwischen einer Ausschwenkstellung und einer Einschwenkstellung verschwenkbar ist, wobei das Lastaufnahmeelement in der Einschwenkstellung in die Aufnahmemulde eingeschwenkt ist, und wobei das Lastaufnahmeelement in der Ausschwenkstellung aus der Aufnahmemulde ausgeschwenkt und für das Anhängen einer Last positioniert ist, sowie einer Verwendung einer solchen Lastaufnahmevorrichtung.

Hintergrund der Erfindung und Stand der Technik Lastaufnahmevorrichtungen des eingangs genannten Aufbaus dienen insbesondere dazu, eine schwere Last daran (wieder lösbar) aufzuhängen. Die Lastaufnahmevorrichtung ist dazu einbetoniert, typischerweise in einen Deckenteil eines Betonbauwerkes, wie beispielsweise einen Aufzugsschacht. Eine Last wird als schwer bezeichnet, wenn sie mehr als 0,5 oder 1 Tonne wiegt. Beispielsweise in einem Aufzugsschacht wird typischerweise eine mobile Arbeitsplattform an der Lastaufnahmevorrichtung aufgehängt.

Das Lastaufnahmeelement wird hierzu aus der Aufnahmemulde ausgeschwenkt und die Last daran befestigt bzw. eingehängt. In Ruhestellung, also wenn keine Last einzuhängen ist, befindet sich das Lastaufnahmeelement in der Aufnahmemulde und ist typischerweise hierin vollständig eingetaucht.

Soll eine Last in das Lastaufnahmeelement eingehängt werden, so muss das Lastaufnahmeelement in die Ausschwenkstellung verschwenkt und in dieser Ausschwenkstellung auch gehalten werden, was umständlich sein kann, wenn das Lastaufnahmeelement mit dem Ende der Last nicht richtig "getroffen" wird.

Eine Lastaufnahmevorrichtung des eingangs genannten Aufbaus ist beispielsweise aus der Literaturstelle EP 3643854 A1 bekannt. Dabei ist eine vertikal wirkende Feder eingerichtet, welche ein Schiebeelement in vertikaler Richtung und nach unten federbelastet. An dem Schiebeelement ist eine Lastöse verschwenkbar aufgehängt. Ein Sperrelement hält die Lastöse in der Ausschwenkstellung, so dass die Last eingehängt werden und dabei nicht unbeabsichtigt in Richtung der Einschwenkstellung verschwenkt werden kann. Zum Verschwenken der Lastöse in die Einschwenkstellung muss das Sperrelement entriegelt und die Lastöse dann verschwenkt werden Dies ist konstruktiv aufwändig und in der Bedienung umständlich.

### Technisches Problem der Erfindung

Der Erfindung liegt das technische Problem zu Grunde eine Lastaufnahmevorrichtung zu Verfügung zu stellen, welche konstruktiv einfach baut, einfach zu bedienen ist, und dennoch gewährleistet, dass das Lastaufnahmeelement sowohl in der Einschwenkstellung als auch in der Ausschwenkstellung jeweils kraftschlüssig gehalten wird.

### Grundzüge der Erfindung und bevorzugte Ausführungsformen

Zu Lösung dieses technischen Problems lehrt die Erfindung, dass ein Federelement eingerichtet ist, welches das Lastaufnahmeelement in Richtung der Ausschwenkstellung federbelastet, und dass in der Aufnahmemulde ein Magnetelement befestigt ist, welcher das Lastaufnahmeelement in der Einschwenkstellung gegen die Federkraft des Federelements fest hält.

Die Erfindung macht sich zu Nutze, dass eine Federkraft in allererster Näherung dem Hookeschen Gesetz folgt, als die Kraft linear mit der Auslenkung ab- oder zunimmt, während die Magnetkraft in allererster Näherung umgekehrt proportional dem Quadrat des Abstandes ist. Bei der Erfindung gibt es daher in einer bestimmten Position des Lastaufnahmeelementes, welche zwischen der Ausschwenkstellung und der Einschwenkstellung liegt, ein metastabiles Gleichgewicht zwischen der magnetischen Anziehung zwischen Magnetelement und Lastaufnahmeelement einerseits, und der Federkraft des Federelementes andererseits. Metastabil bedeutet hier, dass eine minimale Auslenkung aus dem Gleichgewichtszustand dazu führt, dass das Lastaufnahmeelement entweder in die Einschwenkstellung oder in die Ausschwenkstellung schnappt, je nachdem in welcher Richtung die Auslenkung stattfindet. In Ergebnis wird das Lastaufnahmeelement sowohl in der Einschwenkstellung als auch in der Ausschwenkstellung kraftschlüssig gehalten und kann mit Krafteinsatz zwischen diesen Stellungen verschwenkt werden. Dies macht die Bedienung besonders einfach und zeichnet sich zudem durch konstruktive Einfachheit aus.

In einer besonderen Weiterbildung der Erfindung ist ein Auslöseelement zum Lösen des Lastaufnahmeelementes von dem Magnetelement eingerichtet. Bei Betätigung des Auslöseelementes wird das Lastaufnahmeelement aus der Einschwenkstellung und über besagtes metastabiles Gleichgewicht hinaus gedrückt, so dass das Lastaufnahmeelement selbsttätig in die Ausschwenkstellung schwenkt.

Dieses Auslöseelement kann im Einzelnen wie folgt ausgebildet sein. Bei dieser Ausführungsform handelt es sich um ein Blech, welches im Kern W-förmig ausgebildet ist, wobei der Mittelteil des "W" am Magnetelement befestigt ist. Die beiden Außenschenkel des "W" untergreifen das Lastaufnahmeelement seitlich neben dem Magnetelement. An der Basis des "W" ist ein nach außen abgewinkeltes Betätigungselement angebracht. Wird das Betätigungselement gedrückt, so werden die Außenschenkel des "W" angehoben und hebeln das Lastaufnahmeelement von dem Magnetelement ab, und zwar so weit, bis das Lastaufnahmeelement die Position des metastabilen Gleichgewichts überschreitet. Im Ergebnis schwenkt das Lastaufnahmeelement unter der Federkraft des Federelements in die Ausschwenkstellung. Umgekehrt, beim Verschwenken des Lastaufnahmeelementes in die Einschwenkstellung wird dieses gegen die Außenschenkel des "W" soweit eingedrückt, bis die Position des metastabilen Gleichgewichts des Lastaufnahmeelementes in Richtung des Magnetelementes überschritten ist, so dass das Lastaufnahmeelement von Magnetelement gehalten wird.

Für das Lastaufnahmeelementkommen insbesondere neben Eisen auch ferromagnetische Stähle in Frage.

Die Magnetkraft des Magnetelements i.V.m den ferromagnetischen Eigenschaften sowie dem Abstand der Position des Magnetelementes und dessen Gewicht ist gegenüber der Federkraft des Federelementes so bemessen, dass das Lastaufnahmeelement zuverlässig in der Einschwenkstellung gehalten wird. Die Federkraft des Federelementes ist so zu bemessen, dass ein unproblematisches einhängen einer Last möglich ist.

In Folgenden werden nicht limitierende bevorzugte Ausführungsformen näher erläutert.

Bevorzugter Weise handelt es sich bei dem Lastaufnahmeelement um eine Lastöse. Die Lastaufnahmevorrichtung ist typischerweise in eine Betondecke, insbesondere eines Aufzugsschachtes, einbetonierbar. Grundsätzlich ist die erfindungsgemäße Lastaufnahmevorrichtung aber mit beliebiger Orientierung einsetzbar.

Es ist bevorzugt, wenn das Lastaufnahmeelement in der Einschwenkstellung bündig in der Aufnahmemulde liegt. Auch ist es unabhängig davon bevorzugt, wenn die Aufnahmemulde bündig einbetonierbar ist, so dass das Gesamtkonstrukt in der Einschwenkstellung des Lastaufnahmeelementes bündig mit einer Betonwandung bzw. -Decke abschließt.

Es ist zweckmäßig, wenn die Einschwenkstellung und die Ausschwenkstellung etwa in einem Winkel von 90° zueinander stehen. Es ist aber auch möglich, dass die Einschwenkstellung einen geringeren Winkel zur Ausschwenkstellung aufweist.

Die Schwenkachse des Lastaufnahmeelements wird typischerweise im Wesentlichen horizontal angeordnet sein. Im Einzelnen ist es bevorzugt, wenn das Federelement als zu der Schwenkachse des Lastaufnahmeelementes koaxiale Schenkelfeder ausgebildet ist, wobei ein erster Federschenkel sich außerhalb der Schwenkachse in der Aufnahmemulde abstützt, und wobei ein zweiter Federschenkel sich außerhalb der Schwenkachse gegen das Lastaufnahmeelement abstützt. Das Magnetelement außerhalb der Schwenkachse des Lastaufnahmeelementes in der Aufnahmemulde befestigt, so dass es eine Magnetkraft auf das ferromagnetische Lastaufnahmeelement um seine Schwenkachse bewirken kann.

Es wird sich empfehlen, dass auf der Außen- bzw. Rückseite der Aufnahmemulde Ankerelemente zum zugfesten Einbetonieren eingerichtet sind.

Die Erfindung betrifft des Weiteren die Verwendung einer erfindungsgemäßen Lastaufnahmevorrichtung zur Aufhängung einer Last, insbesondere an der Decke eines Aufzugsschachts.

Im Folgenden wird die Erfindung anhand von ledig ein Ausführungsbeispiel zeigenden Figuren näher erläutert. Es zeigen:
Figur 1: eine Aufsicht auf eine erfindungsgemäße Lastaufnahmevorrichtung in der Einschwenkstellung,
Figur 2: eine Aufsicht auf eine erfindungsgemäße Lastaufnahmevorrichtung in der Ausschwenkstellung,
Figur 3: eine vorteilhafte Ausführungsform mit Auslöseelement in 4 verschiedenen Ansichten, a) Aufsicht mit Lastaufnahmeelement in der Einschwenkstellung, b) Aufsicht mit Lastaufnahmeelement in der Ausschwenkstellung, c) Seitenansicht mit Lastaufnahmeelement in der Einschwenkstellung, und d) Seitenansicht mit Lastaufnahmeelement in der Ausschwenkstellung.

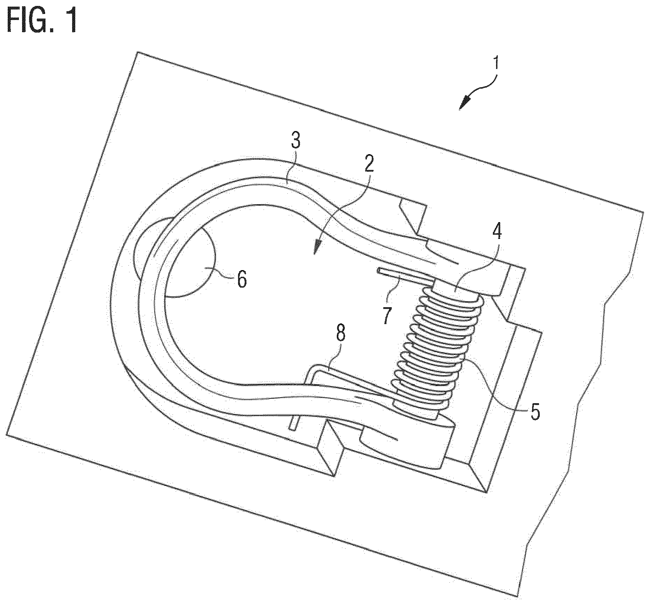

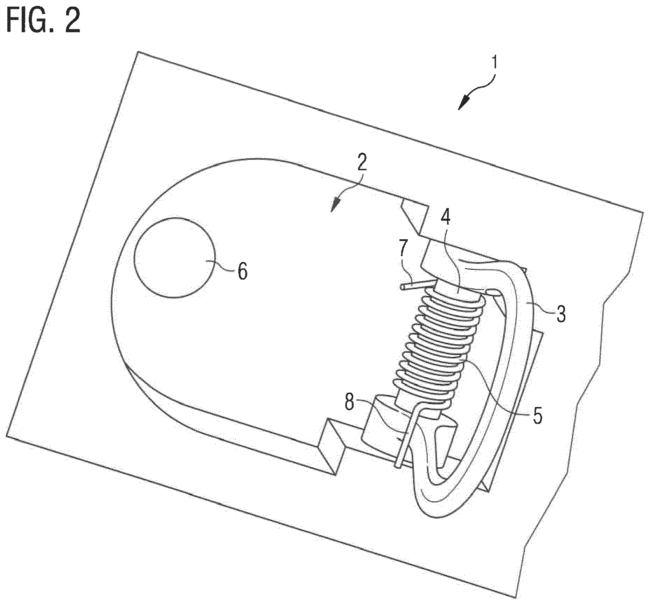

In den Figuren 1 und 2 erkennt man eine Lastaufnahmevorrichtung 1, mit einer Aufnahmemulde 2 zur Aufnahme eines Lastaufnahmeelementes 3, und mit einem in der Aufnahmemulde 2 befestigten ferromagnetischen Lastaufnahmeelement 3.

Einer vergleichenden Betrachtung der Figuren 1 und 2 ist entnehmbar, dass das Lastaufnahmeelement 3 in der Aufnahmemulde 2 um eine Schwenkachse 4 zwischen einer Ausschwenkstellung und einer Einschwenkstellung verschwenkbar ist. In der Einschwenkstellung ist das Lastaufnahmeelement 3 in die Aufnahmemulde 2 eingeschwenkt. In der Ausschwenkstellung ist das Lastaufnahmeelement 3 aus der Aufnahmemulde 2 ausgeschwenkt und für das Anhängen einer Last positioniert.

Des Weiteren erkennt man in beiden Figuren, dass ein Federelement 5 eingerichtet ist, welches das Lastaufnahmeelement 3 in Richtung der Ausschwenkstellung federbelastet. In der Aufnahmemulde 2 ist ein Magnetelement 6 befestigt ist, welches das Lastaufnahmeelement 3 in der Einschwenkstellung gegen die Federkraft des Federelements 5 fest hält. Im Einzelnen ist im Ausführungsbeispiel das Federelement 5 als zu der Schwenkachse 4 des Lastaufnahmeelementes 3 koaxiale Schenkelfeder 5 ausgebildet, wobei ein erster Federschenkel 7 sich außerhalb der Schwenkachse 4 in der Aufnahmemulde 4 abstützt, und wobei ein zweiter Federschenkel 8 sich außerhalb der Schwenkachse 4 gegen das Lastaufnahmeelement 3 abstützt. Die Schenkelfeder 5 ist dabei in Richtung der Ausschwenkstellung des Lastaufnahmeelementes 3 vor gespannt.

Das Magnetelement 6 wiederum ist außerhalb der Schwenkachse 4 des Lastaufnahmeelementes in der Aufnahmemulde 4 befestigt Im Ausführungsbeispiel ist das Lastaufnahmeelement 3 eine Lastöse, welche um ca. 90 ° um die im Wesentlichen horizontal orientierte Schwenkachse 4 verschwenkbar ist.

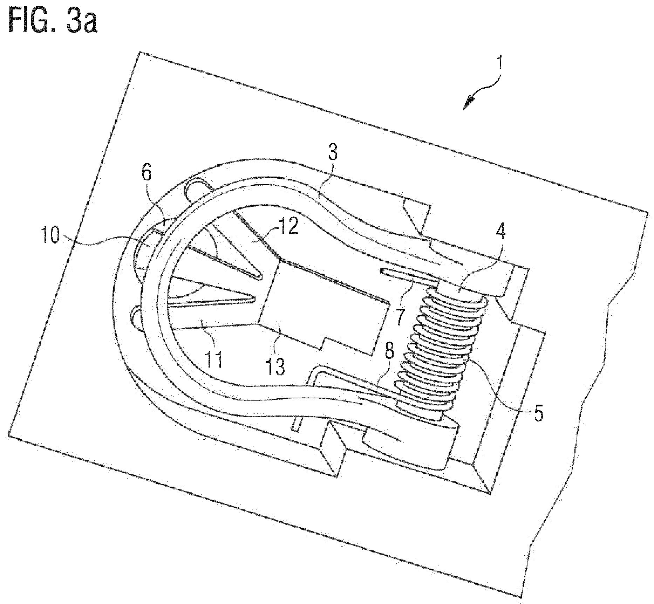

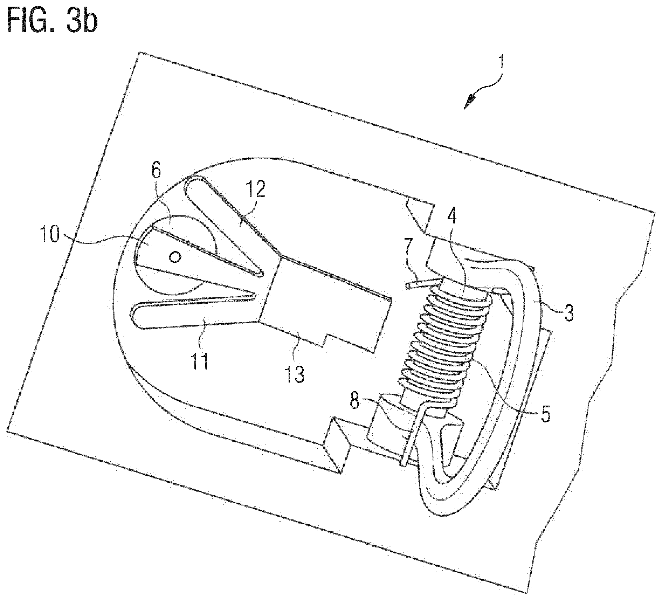

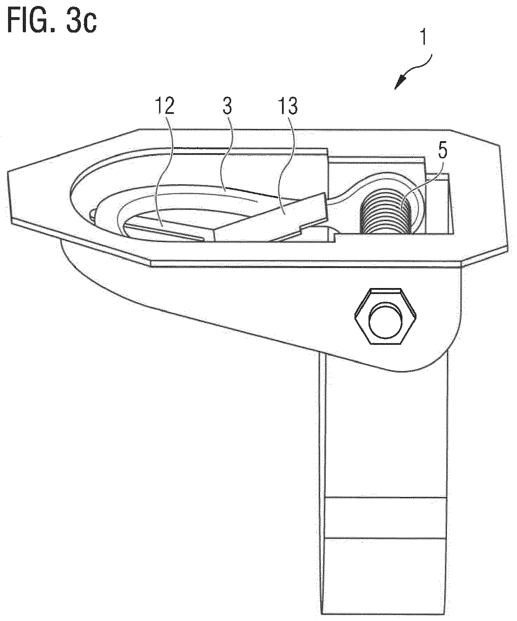

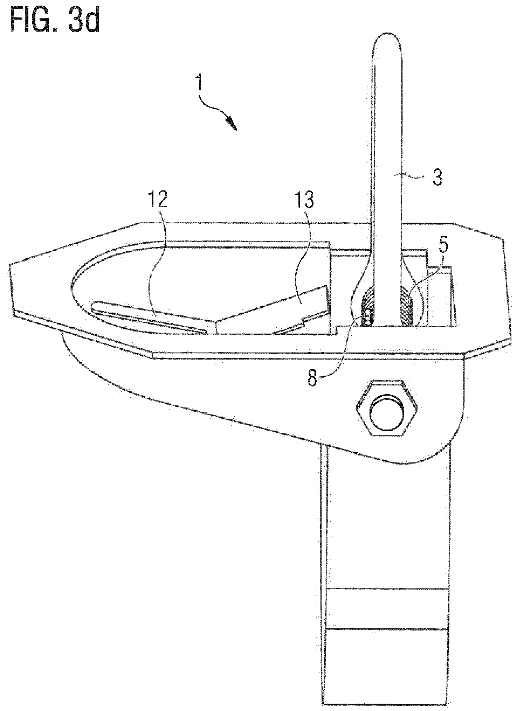

In der Figur 3 ist ein Beispiel eines Auslöseelementes 9 dargestellt. Bei dieser Ausführungsform handelt es sich um ein Blech, welches im Kern W-förmig ausgebildet ist, wobei der Mittelteil 10 des "W" am Magnetelement 6 befestigt ist. Die beiden Außenschenkel 11, 12 des "W" untergreifen das Lastaufnahmeelement 3 seitlich neben dem Magnetelement 6. An der Basis des "W" ist ein nach außen abgewinkeltes Betätigungselement 13 angebracht. Wird das Betätigungselement gedrückt, so werden die Außenschenkel des "W" federnd angehoben und hebeln das Lastaufnahmeelement 3 von dem Magnetelement 6 ab, und zwar so weit, bis das Lastaufnahmeelement 3 die Position des metastabilen Gleichgewichts überschreitet. Im Ergebnis schwenkt das Lastaufnahmeelement 3 unter der Federkraft des Federelements 5 in die Ausschwenkstellung. Umgekehrt, beim Verschwenken des Lastaufnahmeelementes 3 in die Einschwenkstellung wird dieses gegen die Außenschenkel des "W" soweit eingedrückt, bis die Position des metastabilen Gleichgewichts des Lastaufnahmeelementes 3 in Richtung des Magnetelementes 6 überschritten ist, so dass das Lastaufnahmeelement 3 von Magnetelement 6 gehalten wird.

## Patentansprüche

1. Lastaufnahmevorrichtung (1), mit einer Aufnahmemulde (2) zur Aufnahme eines Lastaufnahmeelementes (3), und mit einem in der Aufnahmemulde (2) befestigten ferromagnetischen Lastaufnahmeelement (3),
wobei das Lastaufnahmeelement (3) in der Aufnahmemulde (2) um eine Schwenkachse (4) zwischen einer Ausschwenkstellung und einer Einschwenkstellung verschwenkbar ist,
wobei das Lastaufnahmeelement (3) in der Einschwenkstellung in die Aufnahmemulde (2) eingeschwenkt ist, und
wobei das Lastaufnahmeelement (3) in der Ausschwenkstellung aus der Aufnahmemulde (2) ausgeschwenkt und für das Anhängen einer Last positioniert ist,
**dadurch gekennzeichnet,**
**dass** ein Federelement (5) eingerichtet ist, welches das Lastaufnahmeelement (3) in Richtung der Ausschwenkstellung federbelastet, und
**dass** in der Aufnahmemulde (2) ein Magnetelement (6) befestigt ist, welcher das Lastaufnahmeelement (3) in der Einschwenkstellung gegen die Federkraft des Federelements (5) fest hält.

2. Lastaufnahmevorrichtung (1) nach Anspruch 1, **dadurch gekennzeichnet, dass** das Lastaufnahmeelement (3) eine Lastöse ist.

3. Lastaufnahmevorrichtung (1) nach einem der Ansprüche 1 oder 2, **dadurch gekennzeichnet, dass** die Lastaufnahmevorrichtung (1) in eine Betondecke, insbesondere eines Aufzugsschachtes, einbetonierbar ist.

4. Lastaufnahmevorrichtung (1) nach einem der Ansprüche 1 bis 3, **dadurch gekennzeichnet, dass** die Einschwenkstellung und die Ausschwenkstellung etwa in einem Winkel von 90° zueinander stehen.

5. Lastaufnahmevorrichtung (1) nach einem der Ansprüche 1 bis 4, **dadurch gekennzeichnet, dass** die Schwenkachse (4) des Lastaufnahmeelements (3) im Wesentlichen horizontal angeordnet ist.

6. Lastaufnahmevorrichtung (1) nach einem der Ansprüche 1 bis 5, **dadurch gekennzeichnet, dass** das Federelement (5) als zu der Schwenkachse (4) des Lastaufnahmeelementes (3) koaxiale Schenkelfeder (5) ausgebildet ist, wobei ein erster Federschenkel (7) sich außerhalb der Schwenkachse (4) in der Aufnahmemulde (4) abstützt, und wobei ein zweiter Federschenkel (8) sich außerhalb der Schwenkachse (4) gegen das Lastaufnahmeelement (3) abstützt.

7. Lastaufnahmevorrichtung (1) nach einem der Ansprüche 1 bis 6, **dadurch gekennzeichnet, dass** das Magnetelement (6) außerhalb der Schwenkachse (4) des Lastaufnahmeelementes in der Aufnahmemulde (4) befestigt ist.

8. Lastaufnahmevorrichtung (1) nach einem der Ansprüche 1 bis 7, **dadurch gekennzeichnet, dass** außenseitig der Aufnahmemulde (4) Ankerelemente zum zugfesten Einbetonieren eingerichtet sind.

9. Lastaufnahmevorrichtung (1) nach einem der Ansprüche 1 bis 8, **dadurch gekennzeichnet, dass** ein Auslöseelement (9) zum Lösen des Lastaufnahmeelementes (3) von dem Magnetelement (6) eingerichtet ist.

10. Verwendung einer Lastaufnahmevorrichtung (1) nach einem der Ansprüche 1 bis 9 zur Aufhängung einer Last, insbesondere an der Decke eines Aufzugsschachts.
